# EUROPEAN PATENT SPECIFICATION

(11) **EP 1 092 616 B1**
(45) Date of publication and mention of the grant of the patent: **10.03.2010**
(21) Application number: 00122166.2
(22) Date of filing: 12.10.2000
(51) Int. Cl.: B62J 1/12

(54) **Seat structure for motorcycles**
Sitzstruktur für Motorräder
Structure de siège pour motocyclettes

(30) Priority: 15.10.1999 JP 29461699
(43) Date of publication of application: 18.04.2001
(73) Proprietor: HONDA GIKEN KOGYO KABUSHIKI KAISHA, Tokyo (JP)
(72) Inventor: Yamaguchi, Masaaki, 4-1, Chuo 1-chome, Wako-shi, Saitama (JP); Yanagida, Takayuki, 4-1, Chuo 1-chome, Wako-shi, Saitama (JP); Tanaka, Tetsuharu, 4-1, Chuo 1-chome, Wako-shi, Saitama (JP)
(74) Representative: Liska, Horst

(56) References cited:
- EP-A- 0 858 876
- JP-A- 59 195 478
- US-A- 5 397 517
- PATENT ABSTRACTS OF JAPAN vol. 1998, no. 11, 30 September 1998 (1998-09-30) -& JP 10 167139 A (SUZUKI MOTOR CORP), 23 June 1998 (1998-06-23)
- PATENT ABSTRACTS OF JAPAN vol. 016, no. 087 (M-1217), 3 March 1992 (1992-03-03) -& JP 03 271087 A (HONDA MOTOR CO LTD), 3 December 1991 (1991-12-03)

## Description

The present invention relates to a seat structure for a small vehicle such as a motorcycle having a bottom plate on a lower face of a cushion member.

Document US-A-5 397 517 discloses a seat structure for wheelchairs with a cushion member mounted on an elastically deformable bottom plate.

It is necessary that a seat for a small vehicle such as a motorcycle is constructed by a constitution which is comfortable to be seated thereon and preferable for riding. As such a seat, for example, there has been proposed Japanese Utility Model Registration No.2557909 'Structure of Fixing Seat in Vehicle of Motorcycle'. A detailed explanation will be given of essential points of the technology as follows.

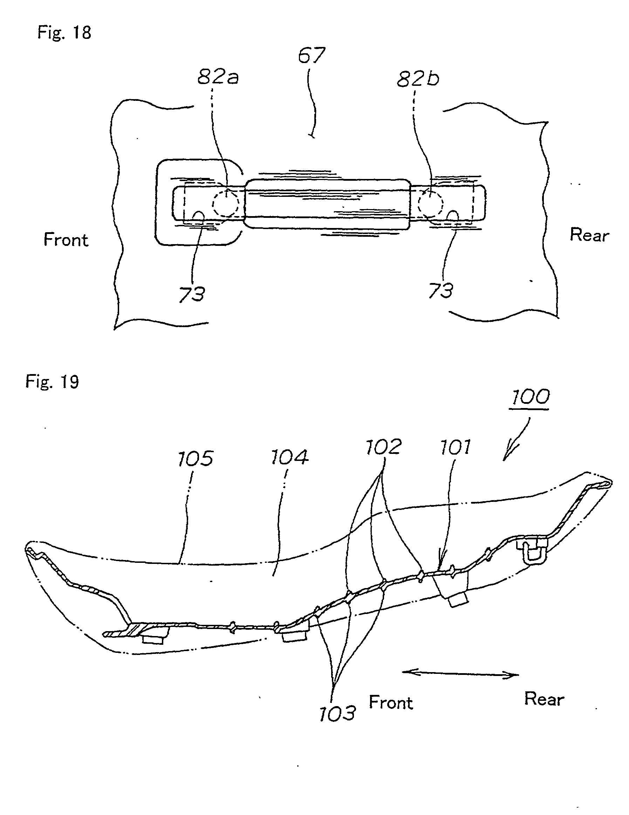

Fig.19 is an outline view of a conventional seat structure of a motorcycle.

A seat structure 100 is constituted by mounting a cushion member 104 on an elastically deformable bottom plate 101 and covering the cushion member 104 with a skin member 105. The bottom plate 101 of the seat structure 100 is formed to be provided with a rigidity such that the seat is not excessively recessed when a rider or a fellow passenger is seated thereon and elastically deformable (flexibly) to absorb vibration in running. In order to achieve light weight formation of the bottom plate 101, the plate thickness is reduced and upper and lower faces of the bottom plate 101 are formed with ribs 102 ..., 103... (...designates a plural number) for reinforcement.

However, since the ribs 102...,103...for reinforcement are formed on the upper and lower faces of the bottom plate 101, the upper and lower faces of the bottom plate 101 are brought into a recessed and protruded state. Therefore, in order to mold the bottom plate 101 by a molding die, it is necessary to machine a mold face of the molding die in the recessed and protruded state. Therefore, the mold face of the molding die is constituted by a complicated shape and accordingly, cause of increase in cost results.

Further, in order to form the ribs 102...for reinforcement on the upper face of the bottom plate 101, the upper face of the bottom plate 101 is brought into the recessed and protruded state. Therefore, it is necessary to thicken the cushion member 104 such that a rider or a fellow passenger does not feel recesses and protrusions of the bottom plate when seated on the seat. When the cushion member 104 is thickened, light weight formation of the seat structure is hampered and cause of increase in cost results.

Hence, it is an object of the present invention to provide a technology capable of achieving light weight formation of a seat structure for a small vehicle such as a motorcycle and restraining fabrication cost.

In order to resolve the above-described problem, according to the present invention, there is provided a seat structure for a motorcycle according to claim 1.

By forming the foamed core layer at an inner portion of the bottom plate, the plate thickness of the bottom plate can be increased. The rigidity of the bottom plate is significantly influenced by the plate thickness and therefore, by increasing the plate thickness, the rigidity of the bottom plate can sufficiently be increased.

Therefore, it is not necessary to form ribs for reinforcement on upper and lower faces of the bottom plate in order to increase the rigidity of the bottom plate and therefore, the upper and lower faces of the bottom plate can be formed comparatively flatly.

Therefore, in a mold die for forming the bottom plate, it is not necessary to form recesses and protrusions for ribs on a mold face of the molding die and therefore, the mold face of the molding die can be constituted by a simple shape.

In the meantime, the foamed core layer is constituted by a foamed member and accordingly, the weight is light. Therefore, even when the foamed core layer is formed at the inner portion of the bottom plate, the weight of the bottom plate can be made light. As a result, light weight formation of the seat structure for a small vehicle such as a motorcycle can be achieved.

According to a second aspect of the invention, the skin member is folded along an outer edge of the bottom plate to an inner side thereof, a fixing needle is struck from below to the folded skin member and the fixing needle is made to penetrate the closely-packed skin layer and the foamed core layer.

There is constructed so that the skin member is fastened to the bottom plate by penetrating the fixing needle to the closely-packed skin layer and the foamed core layer of the bottom plate. The foamed core layer is a foamed member and therefore, the foamed layer is soft in comparison with the closely-packed skin layer. Therefore, when the fixing needle is struck to the bottom plate, the fixing needle can be struck smoothly owing to the foamed core layer. That is, when there is a soft member on inner sides of hard members, the fixing needle penetrating the hard member actively enters the soft member. Therefore, the fixing needle, the skin member and the bottom plate can be brought into close contact each other.

Further, even after the fixing needle has been struck, by elastic force of the foamed core layer, the fixing needle and the skin member can be brought into close contact with the bottom plate and accordingly, the skin member can be prevented from being slackened or loosened.

The present invention achieves following effects by the above-described constitution.

According to the first aspect, the bottom plate is constituted by the sandwich structure comprising the foamed core layer and the closely-packed skin layers covering the foamed core layer. By forming the foamed core layer at the inner portion of the bottom plate, the plate thickness of the bottom plate can be increased. The rigidity of the bottom plate is significantly influenced by the plate thickness and therefore, by increasing the plate thickness, the rigidity of the bottom plate can sufficiently be promoted.

Therefore, it is not necessary to form ribs for reinforcement on upper and lower faces of the bottom plate in order to promote the rigidity of the bottom plate and therefore, the upper and lower faces of the bottom plate can be formed comparatively flat. Therefore, it is not necessary to form recesses and protrusions for ribs on a mold face of a molding die in the molding die for forming the bottom plate. As a result, the mold face of the molding die can be formed in a simple shape and therefore, the fabrication cost can be restrained.

In the meantime, the foamed core layer is a foamed member and therefore, the weight is light. Therefore, even when the foamed core layer is formed at the inner portion of the bottom plate, the weight of the bottom plate can be made light. As a result, light-weight formation of the seat structure for a small vehicle such as a motorcycle can be achieved.

According to the second aspect, there is constructed the constitution in which the skin member is held by the bottom plate by penetrating the fixing needles to the closely-packed skin layer and the foamed core layer of the bottom plate. The foamed core layer is of a foamed material and therefore, the foamed core layer is soft in comparison with the closely-packed skin layer. Therefore, when the fixing needle is struck to the bottom plate, the fixing needle can be struck smoothly by the foamed core layer. That is, when there is a soft member on inner sides of hard members, the fixing needle which has penetrated through the hard member enters the soft member actively. Therefore, the fixing needles, the skin member and the bottom plate can be brought into close contact with each other.

Further, even after the fixing needles have been struck, by elastic force of the foamed core layer, the fixing needles, the skin member and the bottom plate can be brought into close contact with each other and therefore, the skin member can be prevented from being slackened and loosened.

As a result, the productivity of the seat structure can be promoted and therefore, the fabrication cost can be restrained.

An explanation will be given of embodiments of the present invention in reference to the attached drawings as follows. Further, the drawings are viewed in directions of notations.
Fig.1 is a side of view of a motorcycle attached with a seat structure for a small vehicle according to the present invention (first embodiment)
Fig.2 is a sectional view of the seat structure for a small vehicle such as a motorcycle according to the present invention (first embodiment).
Fig.3 is a plane view of the seat structure for a small vehicle such as a motorcycle according to the present invention (first embodiment).
Fig.4 is a view enlarging a portion 4 of Fig.2.
Fig.5 is a sectional view taken along a line 5-5 of Fig.2.
Fig.6 is a view seen from an arrow mark 6 of Fig.5.
Fig.7 is a view seen from an arrow mark 7 of Fig.2..
Fig.8 is a sectional view taken along a line 8-8 of Fig.7.
Fig.9 illustrates explanatory views of the seat structure for a small vehicle such as a motorcycle according to the present invention (first embodiment).
Fig. 10 illustrates first fabrication step diagrams of the seat structure for a small vehicle such as a motorcycle according to the present invention (first embodiment).
Fig.11 illustrates second fabrication step diagrams of the seat structure for a small vehicle such as a motorcycle according to the present invention (first embodiment).
Fig.12 is a sectional view of a seat structure for a small vehicle such as a motorcycle according to the present invention (second embodiment).
Fig.13 is a plane view of the seat structure for a small vehicle such as a motorcycle according to the present invention (second embodiment).
Fig.14 is a sectional view taken along a line 14-14 of Fig.12.
Fig.15 is a sectional view taken along a line 15-15 of Fig.12.
Fig.16 is a view seen from an arrow mark 16 of Fig.15.
Fig.17 is a view enlarging a portion 17 of Fig.12.
Fig.18 is a view seen from an arrow mark 18 of Fig.17.
Fig. 19 is an outline view of a conventional seat structure of a motorcycle.

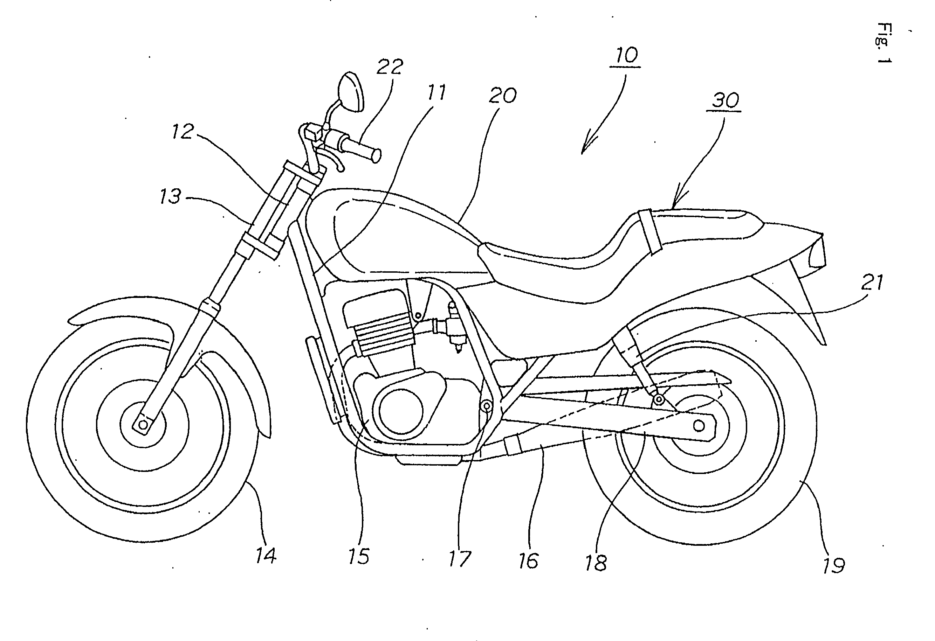

Fig.1 is a side view of a motorcycle attached with a seat structure for a small vehicle according to the present invention (first embodiment).

According to a motorcycle 10, a front fork 13 is supported by a front portion of a main frame 11 via a head pipe 12, a front wheel 14 is attached to the front fork 13, an engine 15 is attached to an inner portion of the main frame 11, an exhaust pipe 16 is extended rearward from the engine 15, a swing arm 18 in a cantilever style is supported via a pivot 17 at a rear end portion of the main frame 11, a rear wheel 19 is attached to the swing arm 18, a fuel tank 20 is attached to an upper portion of the main frame 11 and a seat structure 30 according to the present invention is attached on a rear side of the fuel tank 20.

In the drawing, numeral 21 designates a rear suspension and numeral 22 designates a handlebar.

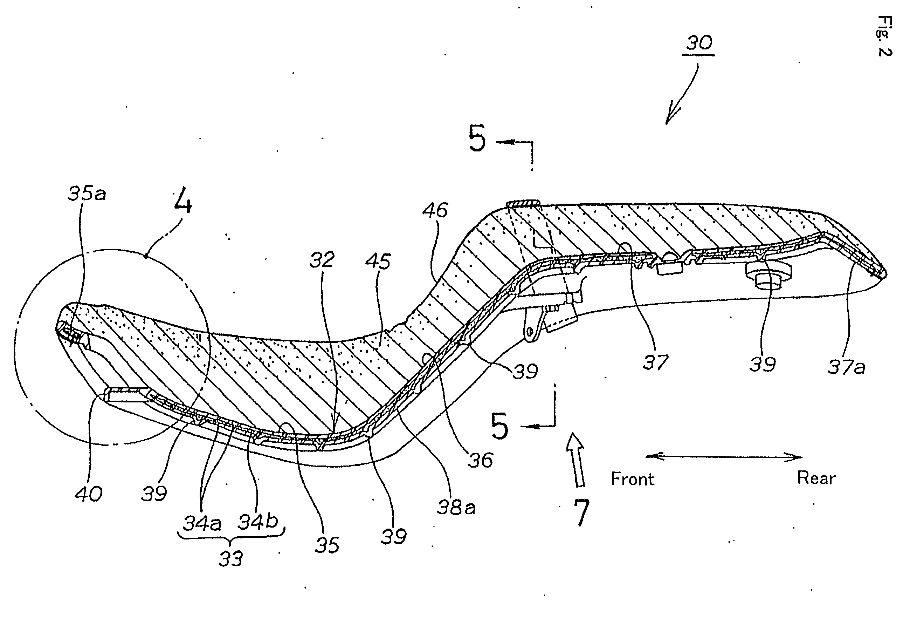

Fig.2 is a sectional view of a seat structure for a small vehicle such as a motorcycle according to the present invention (first embodiment).

The seat structure 30 is a seat in which a cushion member 45 is mounted on an elastically deformable bottom plate 32, the cushion member 45 is covered with a skin member 46 and the bottom plate 32 is constituted by a sandwich structure 33 comprising a foamed core layer 34b and closely-packed skin layers 34a covering the foamed core layer 34b.

According to the sandwich structure 33, in injection-molding the bottom plate 32, an inner portion of a foaming mold material in a cavity is foamed in an unsolidified state, solidified portions thereof at outer side portions constitute the closely-packed skin layers and an inner foamed portion thereof constitutes the foamed core layer.

Therefore, the sandwich structure 33 is referred to as a structure sandwiching the foamed core layer at the inner portion by the closely-packed skin layers 34a at surfaces.

Further, the closely-packed skin layer signifies to include very small foams and indicates a layer having a foaming ratio considerably different from that of the foamed core layer. That is, this is a dense layer including almost no foamed portion and hollow portion.

Further, the foamed core layer is referred to as a layer comprising a foamed portion.

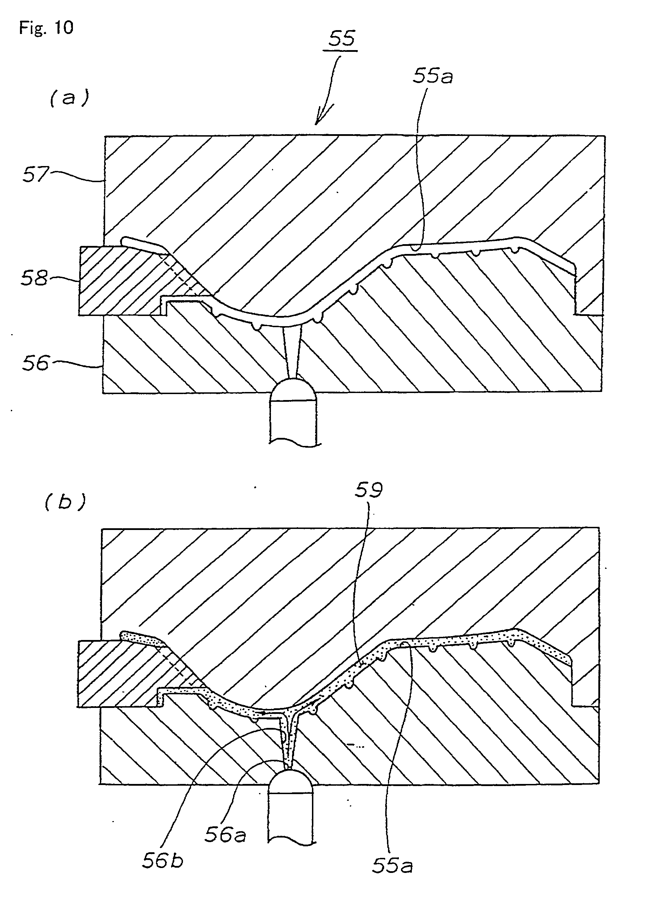

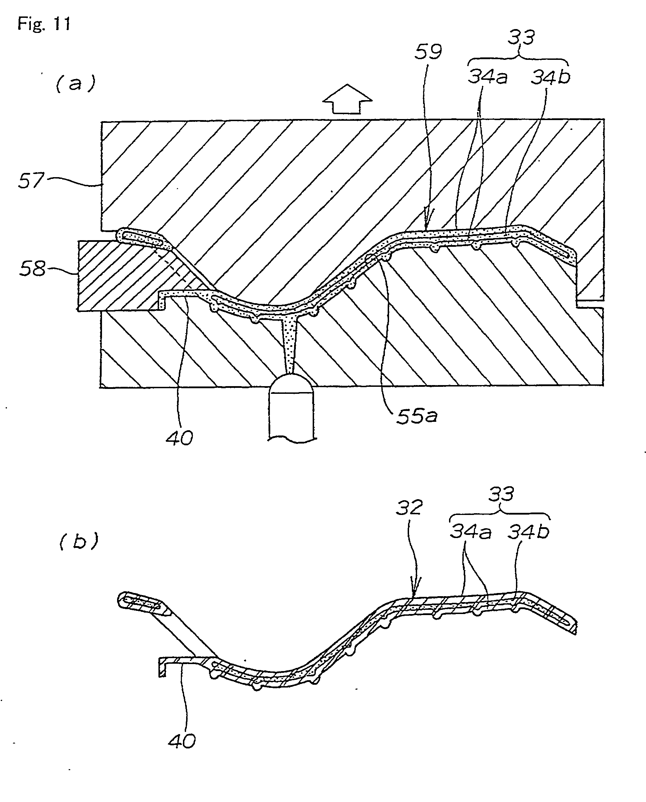

Further, with regard to injection molding of the sandwich structure 33, a detailed explanation will be given in reference to Fig.10 and Fig.11.

According to the bottom plate 32, substantially a total thereof is formed in the sandwich structure 33, a front portion 35 thereof on which a rider rides is formed in a curved face, an intermediate portion 36 rearward from the front portion 35 is formed in an inclined face directed upwardly, a rear portion (portion on which a fellow passenger rides) 37 rearward from the intermediate portion 36 is formed in a flat face and a lower face 38a thereof is formed with ribs 39...for reinforcement. The ribs 39...for reinforcement can be formed as necessary.

The bottom plate 32 is constituted by the sandwich structure 33 and therefore, sufficient rigidity can be provided by only constituting a plate thickness substantially twice as much as that of the conventional bottom plate. Therefore, the rigidity can be increased while achieving light weight formation of the bottom plate.

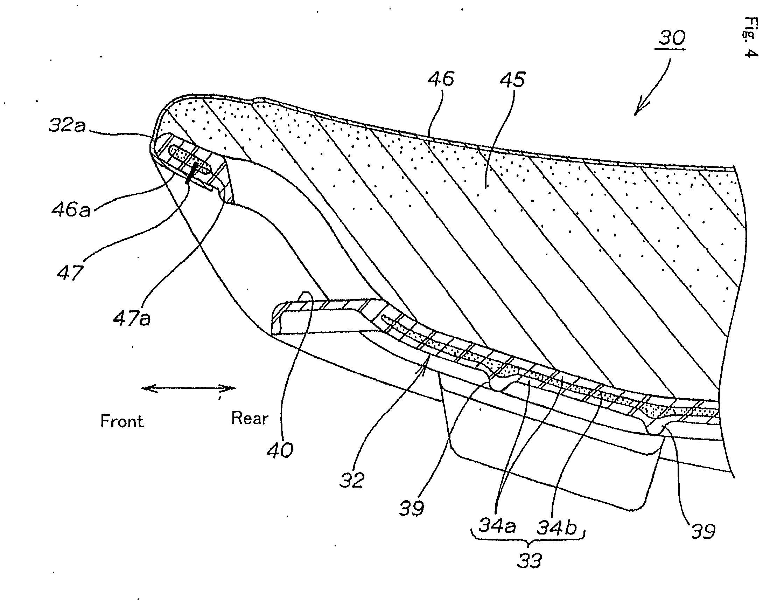

The bottom plate 32 ensures the rigidity by folding a front end 35a of the front portion 35 upwardly and folding a rear end 37a downwardly and is formed with an attaching portion 40 for attaching to a vehicle main body (not illustrated) at the front portion 35. Further, an explanation will be given of the attaching portion 40 in reference to Fig.4.

The cushion member 45 is set along upper faces of the front portion 35, the intermediate portion 36 and the rear portion 37 of the bottom plate 32 for making comfortable in riding thereon by absorbing vibration in running.

The skin member 46 is for protecting the cushion member 45 by being covered on the surface of the cushion member 45 and holding the cushion member 45 at the bottom plate 32.

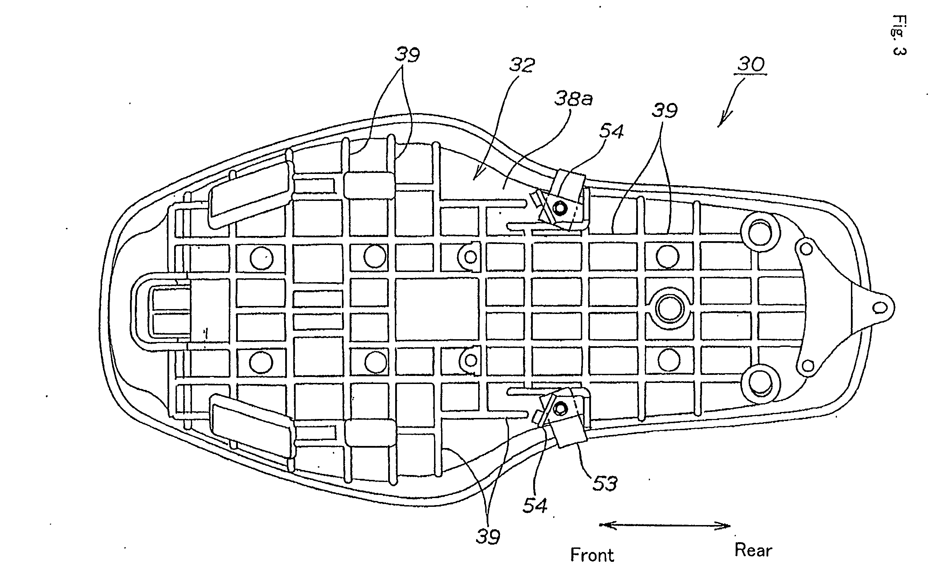

Fig. 3 is a plain view of the seat structure for a small vehicle such as a motorcycle according to the present invention (first embodiment), showing a state in which the ribs 39...for reinforcement are formed at the lower face 38a of the bottom plate 32 in a lattice shape.

Sufficient rigidity can be provided by constituting the bottom plate 32 by the sandwich structure 33 formed with the foamed core layer 34b on inner sides of the closely-packed skin layers 34a and forming the ribs 39...on the lower face 38a as shown by Fig.2.

Further, the ribs 39...are formed only on the lower face 38a of the bottom plate 32 and therefore, the bottom plate 32 can be made light-weighted.

Fig.4 is a view enlarging portion 4 of Fig.2, showing the state in which the bottom plate 32 is formed by a plate member of the sandwich structure 33 (in which the inner foamed core layer 34b is sandwiched by the closely-packed skin layers 34a of the surfaces), the attaching portion 40 is formed at the front portion 35 of the bottom plate 32, the skin member 46 is folded to the inner side along a front edge 32a, a fixing needle 47 is struck to a folded skin member 46a and the fixing needle 47 is made to penetrate the closely-packed skin layer 34a and the foamed core layer 34b to thereby attach the folded skin members 46a to the bottom plate 32.

When the fixing needle 47 is struck to the bottom plate 32 of the sandwich structure 33 (in which the foamed core layer 34b is sandwiched on inner sides of the closely- packed skin layers 34a), a front end 47a of the fixing needle 47 is penetrated up to the foamed core layer 34b. The foamed core layer 34b is soft in comparison with the closely-packed skin layer 34a and accordingly, when the fixing needle 47 is struck to the bottom plate 32, the fixing needle 47 is struck smoothly owing to the foamed core layer 34b. That is, when there is the soft member on inner sides of the hard members, the fixing needle 47 which has penetrated the hard member actively enters the soft member. Therefore, the fixing needle 47, the skin member 46 and the bottom plate 32 can be brought into close contact with each other.

Further, even after the fixing needle 47 has been struck, by elastic force of the foamed core layer 34b, the fixing needle 47, the skin member 46 and the bottom plate 32 can be brought into close contact with each other and therefore, the skin member 46 can be prevented from being slackened or loosened.

The attaching portion 40 is a portion for attaching to the vehicle main body and accordingly, it is requested that the attaching portion 40 is hard (difficult to elastically deform). Therefore, the attaching portion 40 is formed only by the closely-packed skin layer 34a excluding the foamed core layer 34b.

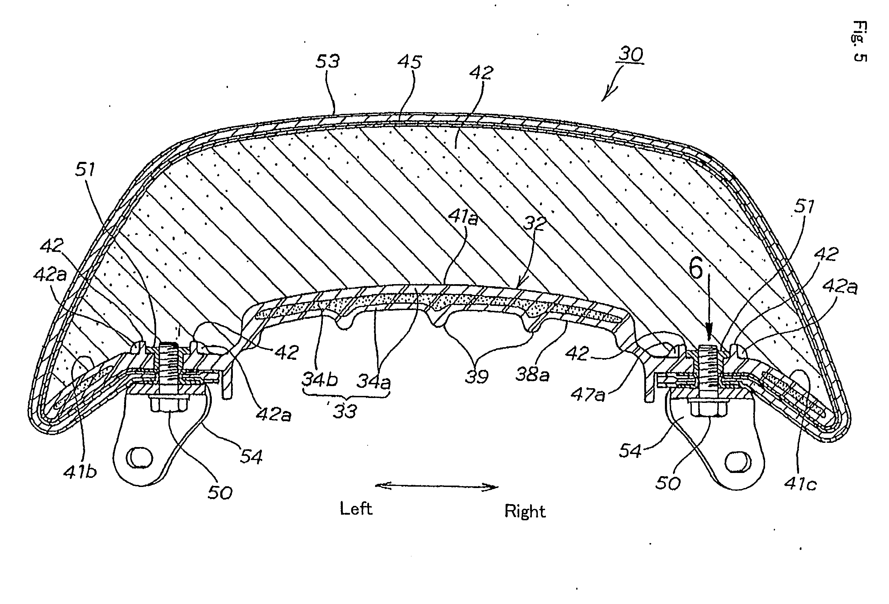

Fig.5 is sectional view taken along a line 5-5 of Fig.2, showing a state in which a gradual bent portion 41a is formed at the center of the bottom plate 32 by the plate member of the sandwich structure 33 and the ribs 39...for reinforcement are formed on the bottom face 38a, left and right downwardly inclined portions 41b and 41c are formed at left and right ends thereof by the plate member of the sandwich structure 33 and belts 53 are attached to inner sides of the left and right downwardly inclined portions 41b and 41c by bolts 50.

The bottom plate 32 is embedded with insert nuts 51 for screwing the bolts 50 at left and right end portions thereof and formed with projections 42 for preventing rotation of the insert nuts 51. Therefore, it is necessary that the projections 42...are hard such that the projections 42...are not deformed even when rotational force is received thereby.

Therefore, by forming recess portions 42a...at the projections 42..., the cooling effect of the projections 42...is promoted to thereby prevent the projections 42...from being formed with foamed core layers.

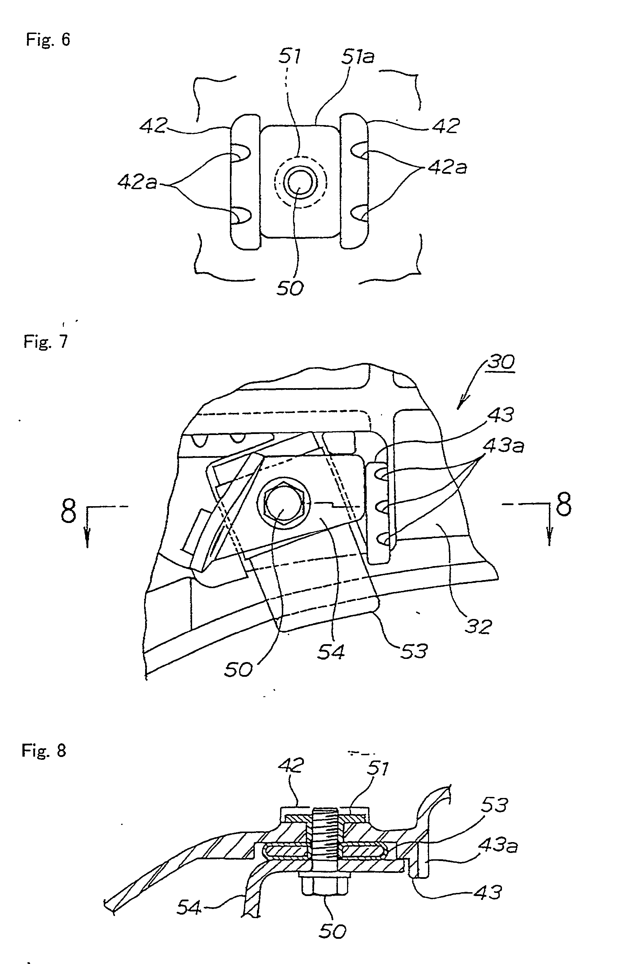

Fig.6 is a view seen from an arrow mark 6 of Fig. 5, showing a state in which the recess portions 42a...are formed at the projections 42 sandwiching a square flange 51a of the insert nut 51.

By forming the recess portions 42a...at the projections 42, the cooling effect of the projections 42 can be promoted and the projections 42 can be prevented from being formed with foamed core layers. Therefore, the square flange 51a can firmly be restrained when the bolt 50 is screwed to the insert nut 51 by hardening the projections 42.

Fig.7 is a view seen from an arrow mark 7 of Fig. 2, showing a state in which an attachment metal piece 54 for attaching the seat structure 30 to the vehicle main body is attached to the bottom plate 32 by the bolt 50.

In attaching the attachment metal piece to the bottom plate 32 by the bolt 50, in order to arrange the attachment metal piece 54 at a regular attaching position, it is necessary to prevent rotation of the attachment metal piece 54 by a projection 43 of the bottom plate 32. Therefore, it is necessary to harden the projection 43 such that the projection 43 is not deformed even when the projection 43 receives rotational force.

Hence, the projection 43 is prevented from being formed with a foamed core layer by promoting the cooling effect of the projection 43 by forming recess portions 43a...at the protection 43.

Fig.8 is a sectional view taken along a line 8-8 of Fig.7, showing a state in which the recess portions 43a...are formed at the projection 43.

When the bolt 50 is screwed to the insert nut 51, rotation of the attachment metal piece 54 can be prevented by firmly restraining the attachment metal piece 54 by the projection.

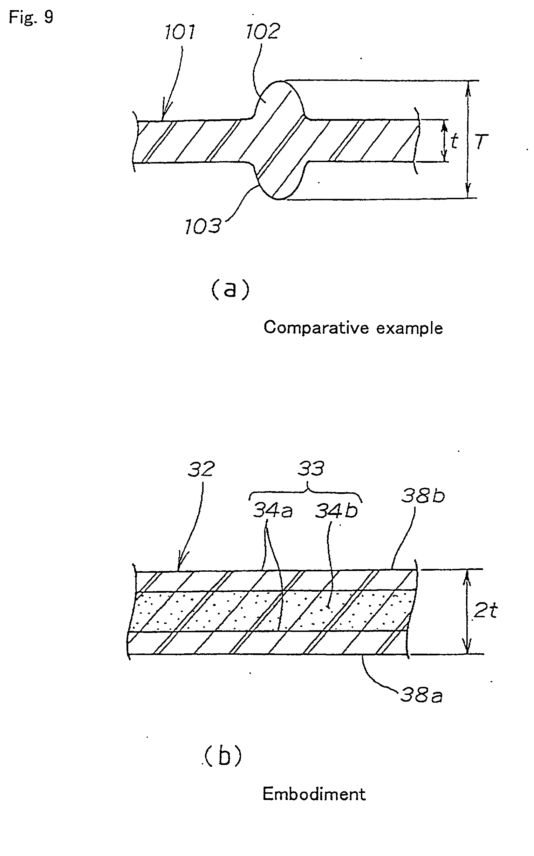

Fig.9(a) and 9(b) are explanatory views of the seat structure for a small vehicle such as a motorcycle according to the present invention (first embodiment) in which Fig.9(a) shows a comparative example and Fig.9(b) shows the embodiment. Further, an explanation will be given by assuming that the bottom plate 32 of Fig.9(b) is not formed with the ribs 39 (shown in Fig.2) for reinforcement at the bottom face 38a.

In Fig.9 (a), the bottom plate 101 having a reference thickness 't', is upwardly and downwardly formed with the ribs 102 and 103 to constitute a total thickness T.

Although the rigidity of the bottom plate 101 can be ensured by forming the upper and lower ribs 102 and 103 on the upper and lower faces, the weight of the bottom plate 101 becomes heavy.

Further, since the upper and lower ribs 102 and 103 are formed on the bottom plate 101, the upper and lower faces of the bottom plate 101 are brought into a recessed and projected state. Therefore, in a molding die for molding the bottom plate, it is necessary to machine a mold face of the molding die in the recessed and projected state and the cost of the molding die is difficult to restrain.

In Fig.9 (b), the bottom plate 32 is formed by the sandwich structure 33 (in which the foamed core layer 34b is sandwiched by inner portions of the closely-packed skin layers 34a). By forming the foamed core layer 34b at the inner portion of the bottom plate 32, the plate thickness of the bottom plate 32 can be made from 't' (refer to Fig.9(a)) to 2t which is substantially twice as much as the reference thickness.

In this case, when the shape of the bottom plate 32 is assumed to be a rectangular shape having a width of 1 and a height of 2t, the modulus of section Z becomes 1 X (2t)²/6. Therefore, when the height of the bottom plate 32 is doubled, the modulus of section is quadrupled and the rigidity of the bottom plate 32 can sufficiently be ensured.

Therefore, it is not necessary to form ribs on the bottom plate 32. The upper and lower faces 38b and 38a of the bottom plate 32 can be made flat. Therefore, in the molding die for molding the bottom plate 32, the mold face can be constituted by a simple shape.

In the meantime, the weight of the foamed core layer 34b can be made light in comparison with the weight of the closely-packed skin layer 34a. Therefore, the weight of the bottom plate 32 can be made light.

Further, the plate thickness 2t of the bottom plate 32 can be made thinner than the plate thickness 't' of the comparative example shown in Fig.9(a).

Fig.10 (a) and 10(b) are first fabrication step diagrams of the seat structure for a small vehicle such as a motorcycle according to the present invention (first embodiment).

In Fig.10 (a), by closing a molding die 55, a cavity 55a is formed by a fixed die 56, a movable die 57 and a side die 58.

In Fig.10 (b), by injecting a molten foaming mold material 59 from a nozzle 56a, a molten foaming mold material 59 is filled in the cavity 55a via a gate 56b.

At this occasion, the inner pressure of the cavity 55a is higher than pressure of foaming the foaming mold material 59 and therefore, the foaming mold material 59 is not foamed.

Fig. 11 (a) and 11(b) are second fabrication step diagrams of the seat structure for a small vehicle such as a motorcycle according to the present invention (first embodiment).

In Fig.11 (a), in a state in which outer side portions of the foaming mold material 59 are solidified and an inner portion thereof is not solidified, the movable die 57 is slightly moved in a die opening direction as shown by an arrow mark.

Therefore, the cavity 55a is widened and the inner pressure of the cavity 55a is reduced. Therefore, an inner portion of the foaming mold material 59 is foamed to thereby form the foamed core layer 34b.

In the meantime, the outer side portions of the foaming mold material 59 have already been solidified to thereby constitute the closely-packed skin layers 34a covering the foamed core layer 34b. Thereby, the bottom plate of the sandwich structure 33 is molded.

Further, in slightly moving the movable die 57 as shown by the arrow mark, by making the side die 58 stay to be arranged at the die closing position, as has been explained in reference to Fig.4, the foamed core layer 34b is prevented from being formed at an inner portion of the attaching portion 40.

In Fig.11 (b), the molding die is opened and the bottom plate 32 is taken out from the molding die.

Therefore, according to the injection molding, when the outer side portions and the inner portion of the foaming mold material 59 are solidified substantially simultaneously, the foamed core layer 34b can be prevented from being formed at the inner portion. By utilizing this, as has been explained in reference to Fig.5 through Fig.8, by thinning the wall thickness by forming a recess portion, it is possible that the foamed core layer 34b is not included in a portion of the bottom plate.

An explanation will be given here of the foaming mold material 59.

As the foaming mold material 59, corresponding thereto are a composition including thermoplastic resin (thermoplastic synthetic resin) and a foaming agent as well as a composition including thermoplastic resin, filler (filling material) and a foaming agent.

As the thermoplastic resin, corresponding thereto are polystyrene, polyethylene, polypropylene, polyvinyl chloride, polyvinylidene chloride, ABS resin, ethylene-vinyl acetate copolymer, polyamide resin, polycarbonate, polyethulene terephthalate, polybutylene terephtalate, metal resin and polyvinyl alcohol etc.

Among these resins, polypropylene is particularly preferable from the reason that the comparatively light-weighted bottom plate 32 is provided. As polypropylene, corresponding thereto are propylene homopolymer, propylene-α-olefin copolymer and a composition (block copolymer) of propylene homopolymer and propylene-α-olefin copolymer.

As α-olefin which is a copolymerizing component of copolymer, corresponding thereto are ethylene, 1 buten, 1-pentene, 1-hexene, 1-octene, 1-decene, 1-docene, 4-methyl-1-pentene, 3-methyl-1-pentene etc.

Further, it is preferable that a rate of α-olefin unit in propylene-α-olefin copolymer is equal to or smaller than 10% of all constitution unit.

Further, as the thermoplastic resin, denatured polymer of denatured polypropylene by unsaturated monomer can also be used.

In the meantime, as the above-described filler, either of organic filler and inorganic filler may be used, specifically, corresponding thereto are glass fiber, mineral fiber, calcium carbonate, talc, kaolin clay, mica, quartz powder, diatom earth, barium sulfate, pumice powder, pulp powder, carbon fiber, synthetic fiber, glass hollow material etc. Among these fillers, glass fiber, talc or mica is preferable.

Content of filler with respect to a total of the foaming mold material is preferably 5 through 50 weight % from the reason that a bottom plate having a seat structure excellent in rigidity and light weight formation is provided.

In the case in which polypropylene is blended with glass fiber as filler to thereby constitute the foaming mold material, it is preferable to use denatured polypropylene as the above-described polypropylene from the reason that denatured polypropylene is excellent in compatibility between glass and polypropylene and a bottom plate made of synthetic resin having a seat structure with high rigidity is provided.

Further, as the above-described foaming agent, corresponding thereto are inorganic compound such as ammonium carbonate and sodium bicarbonate and organic compound such as azo compound, sulfohydrazide compound, nitroso compound and azido compound etc.

As azo compound, corresponding thereto are azodicarbonamide (ADCA), 2, 2-azo-1-butyronitrile, azohexahydrobenzonitrile and diazoaminobenzene etc.

Further, as the above-described sulfohydrazide compound, corresponding thereto are benzenesulfohydrazide, benzane-1, 3-disulfohydrazido, diphenyl sulfone-3, 3-disulfohydrazide and dipheny oxide-4, 4-disulfohydrazido etc.

Further, as the above-described nitroso compound, N, N-dinitrosopentamethylenetetramine (DNPT) and N, N-dimethylterrephthlat etc, can be exemplified and as the above-described azido compound, corresponding thereto are terephthal azido and P-third butylbenzazido etc.

Further, the blend amount of a foaming agent with respect to a total of a foaming mold material is preferably 0.5 through 5 weight %.

Further, the foaming mold material 59 can also be blended with additive agent as necessary. As additive agent, corresponding thereto are plasticizer, stabilizer, antioxidant, weather resistant agent, ultraviolet ray absorbing agent, colorant, lubricant, antistatic agent, flame retardant and elastomer etc.

Next, an explanation will be given of a second embodiment.

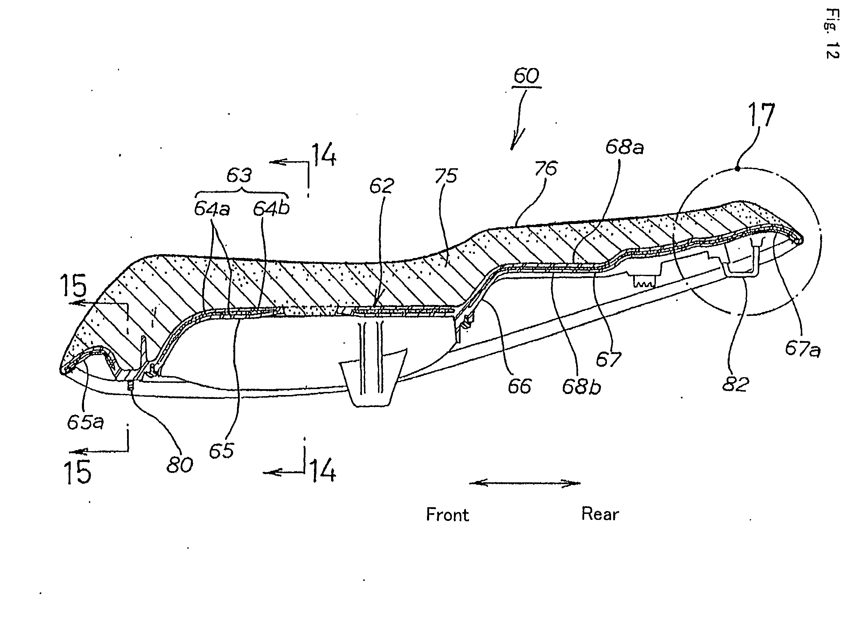

Fig.12 is a sectional view of a seat structure for a small vehicle such as a motorcycle according to the present invention (second embodiment), showing a seat structure for a scooter.

A seat structure 60 is a seat in which a cushion member 75 is mounted on an elastically deformable bottom plate 62, the cushion member 75 is covered with a skin member 76 and the bottom plate 62 is constituted by a sandwich structure 63 comprising a foamed core layer 64b and closely-packed skin layers 64a covering the foamed core layer 64b.

The bottom plate 62 is a plate member having the sandwich structure 63 surfaces of which are formed by the closely-packed skin layers 64a and in which the foamed core layer 64b is formed on inner sides of the closely-packed skin layers 64a, a front portion 65 thereof on which a rider rides is formed in a flat face, an intermediary portion 66 on a rear side of the front portion 65 is formed in an upwardly inclined face and a rear portion 67 (portion on which a fellow passenger rides) on a rear side of the intermediary portion 66 is formed substantially in a flat face.

By forming the bottom plate 62 by the plate member of the sandwich structure 63, the rigidity of the bottom plate 62 can sufficiently be ensured. Therefore, it is not necessary to form ribs for reinforcement on upper and lower faces 68a and 68b of the bottom plate 62 and therefore, the bottom plate can be formed in light weight and a mold face of a molding die can be formed in a simple shape.

Further, the bottom plate 62 is constituted by the sandwich structure 63 and therefore, sufficient rigidity can be provided by only constituting a plate thickness substantially twice as much as that of the conventional bottom plate. Therefore, the rigidity can be promoted while achieving light weight formation of the bottom plate.

According to the bottom plate 62, a front end 65a thereof is folded downwardly, a read end 67a thereof is folded downwardly to thereby ensure the rigidity and a bolt 80 is attached to the front end 65a and a locking member 82 is attached to the rear end 67a.

The bolt 80 is attached with a hinge (not illustrated) for supporting to be capable of opening and closing the seat structure 60 by a vehicle main body. Further, the locking member 82 is locked by a locking piece (not illustrated) of the vehicle main body when the seat structure 60 is closed.

The cushion member 75 is set along upper faces of the front portion 65, the intermediary portion 66 and the rear portion 67 of the bottom plate 62 for making the seat structure 60 comfortable in riding thereon by absorbing vibration in running.

The skin member 76 is for protecting the cushion member 75 by covering the surface of the cushion member 75 and holding the cushion member 75 by the bottom plate 62.

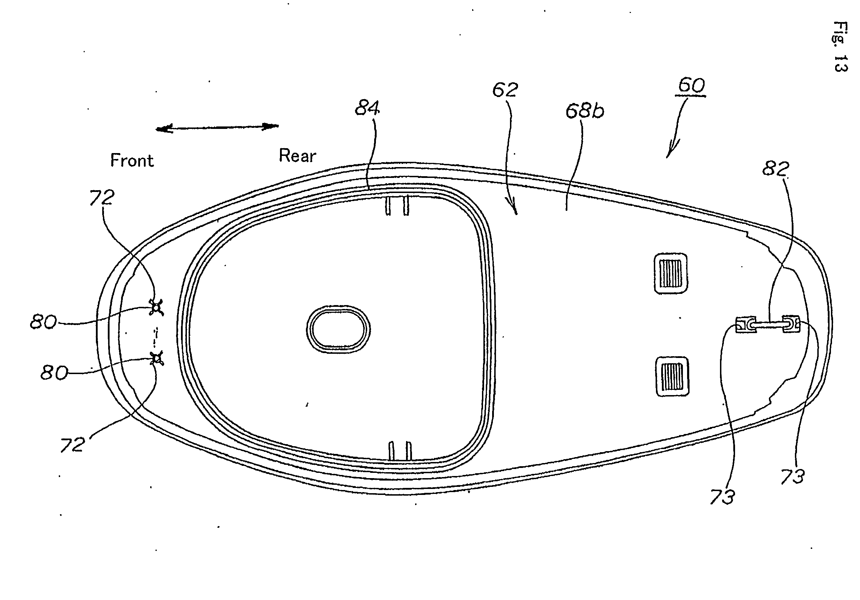

Fig.13 is a plane view of the seat structure for a small vehicle such as a motorcycle according to the present invention (second embodiment), showing a state in which the lower face 68b of the bottom plate 62 is formed flat.

Since the lower face 68b of the bottom plate 62 is formed flat, the outlook is excellent when the seat structure 60 is brought up upwardly from the vehicle main body with the hinge as an axis.

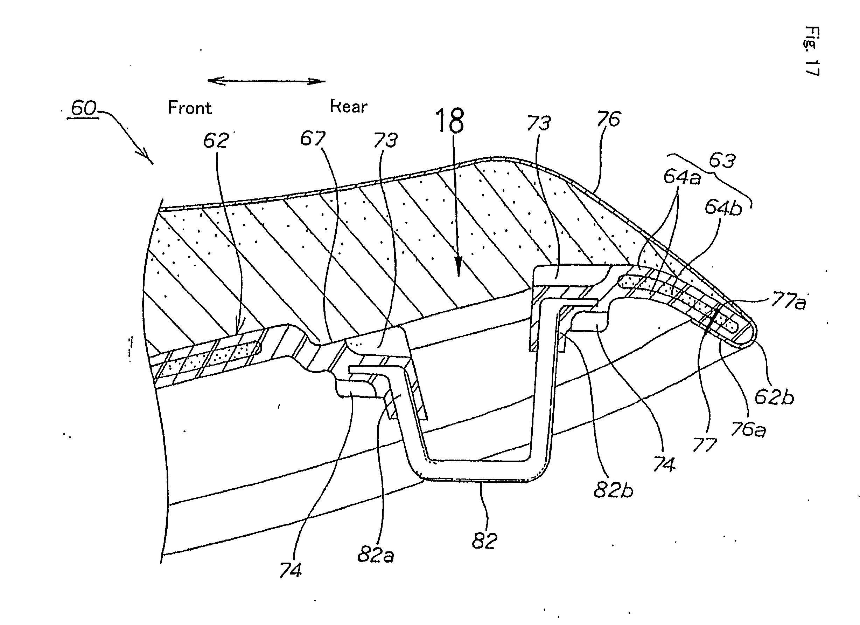

A detailed explanation will be given of recess portions 73 in the drawing in reference to Fig. 17 and Fig.18.

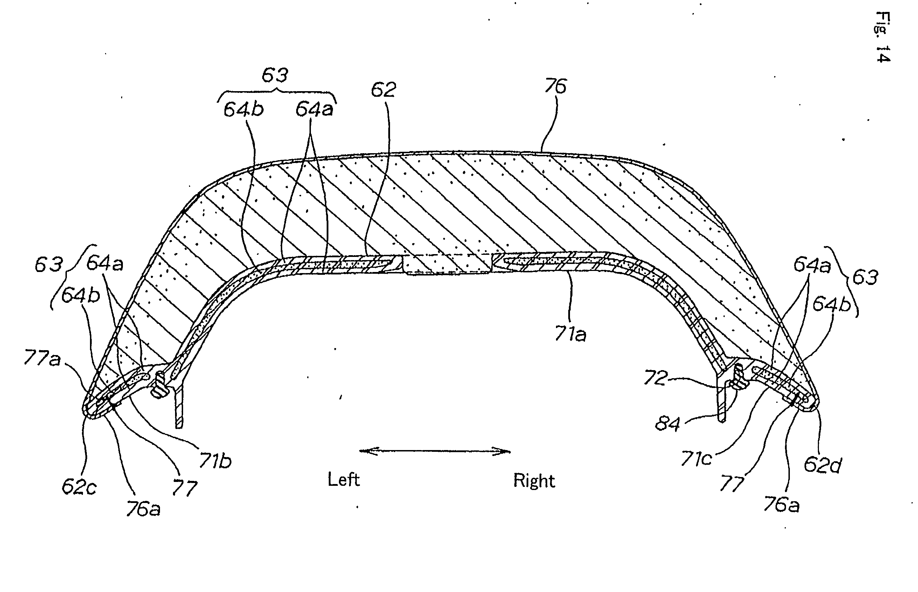

Fig.14 is a sectional view taken along a line 14-14 of Fig.12, showing a state in which a gradual bent portion 71a is formed by the plate member of the sandwich structure 63 at the center of the bottom plate 62, left and right downwardly inclined faces 71b and 71c are formed by the plate member of the sandwich structure at left and right ends and recess portions 72 for attaching seal members 84 are formed on inner sides of the left and right downwardly inclined faces 71b and 71c.

Further, the seal member 84 is for sealing an opening of a luggage box (not illustrated) on the side of the vehicle main body.

The skin member 76 is attached to the bottom plate 62 by folding the skin member 76 to inner sides along outer edges (left edge 62c, right edge 62d) of the bottom plate 62, striking fixing needles 77... to a folded skin member 76a and penetrating the fixing needles 77...to the closely-packed skin layer 64a and the foamed core layer 64b of the bottom plate 62.

By striking the fixing needles 77 to the closely-packed skin layer 64a and the foamed core layer 64b of the bottom plate 62, front ends 77a of the fixing needles 77 reach the foamed core layer 64b. The foamed core layer 64b is of a comparatively soft material and therefore, when the fixing needles 77 are struck to the bottom plate 62, the fixing needles 77 can be struck smoothly by the foamed core layer 64b. That is, when there is a soft member on inner sides of hard members, the fixing needle 77 which has penetrated through the hard member enters the soft member actively. Therefore, the fixing needles 77, the skin member 76 and the bottom plate 62 can be brought into close contact with each other.

Further, even after the fixing needles 77 have struck the skin member 76, by elastic force of the foamed core layer 64b, the fixing needles 77, the skin member 76 and the bottom plate 62 can be brought into close contact with each other and therefore, the skin member 76 can be prevented from being slackened or loosened.

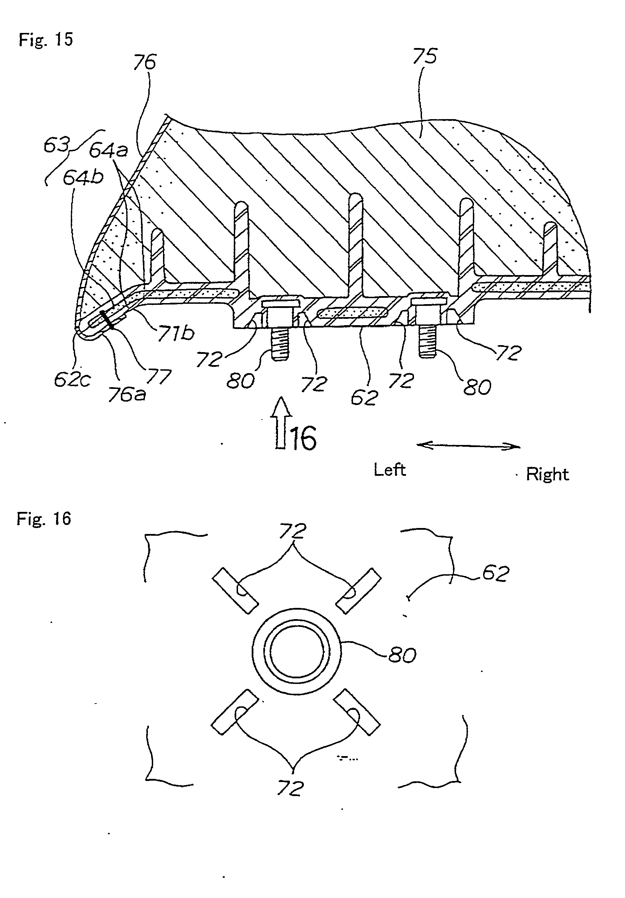

Fig. 15 is a sectional view taken along a line 15-15 of Fig.12, showing a state in which the bolts 80 are embedded at the center of the bottom plate 62 and the recess portions 72 are formed at the bottom plate 62 surrounding the bolts 80.

By forming the recess portions 72... at the bottom plate 62 surrounding the bolts 80, the cooling effect of the bottom plate 62 surrounding the bolts 80 is promoted to thereby prevent foamed core layers from being formed. Therefore, the bolts 80 can solidly be attached to the bottom plate 62.

Fig. 16 is a view seen from an arrow mark 16 of Fig.15, showing a state in which four of the recess portions 72...are formed radially at the bottom plate 62 surrounding the bolt 80.

By forming four of the recess portions 72... at the bottom plate 62 surrounding the bolt 80, the cooling effect of the bottom plate 62 surrounding the bolt 80 can be promoted.

Fig.17 is a view enlarging portion 17 of Fig.12, showing a state in which the skin member 76 is attached to the bottom plate 62 by the fixing needle 77 and base portions 82a and 82b at the front and the rear of the locking member 82 are embedded in the rear portion 67 of the bottom plate 62.

The skin member 76 is attached to the bottom plate 62 by folding the skin member 76 along an outer edge (rear edge 62b) of the bottom plate 62, striking the fixing needles 77...to a folded skin member 76a and penetrating the fixing needles 77...to the closely-packed skin layer 64a and the foamed core layer 64b of the bottom plate 62.

By striking the fixing needles to the closely-packed skin layer 64a and foamed core layer 64b of the bottom plate 62, front ends 77a of the fixing needles 77 reach the foamed core layer 64b. The foamed core layer 64b is of the comparatively soft material and therefore, when the fixing needles 77 are struck to the bottom plate 62, the fixing needles 77 can be struck smoothly by the foamed core layer 64b. That is, when there is a soft member on inner sides of hard members, the fixing needles 77 which have penetrated the hard member enters the soft member actively. Therefore, the fixing needles 77, the skin member 76 and the bottom plate 62 can be brought into close contact with each other.

Further, even after the fixing needles 77 have struck the skin member 76, by elastic force of the foamed core layer 64b, the fixing needles 77, the skin member 76 and the bottom plate 62 can be brought into close contact with each other and therefore, the skin member 76 can be prevented from being slackened or loosened.

The locking member 82 is locked by a locking piece (not illustrate) of the vehicle main body when the seat structure 60 is closed. Therefore, it is necessary to solidly attach the locking member 82 to the rear portion 67 of the bottom plate 62 and it is not preferable to constitute the rear portion 67 surrounding the front and rear face portions 82a and 82b by the sandwich structure 63.

Therefore, by forming recess portions 73 and 74 respectively on upper and lower faces of the rear portion 67 surrounding the base portions 82a and 82b, the cooling effect of the rear portion 67 surrounding the front and rear base portions 82a and 82b is promoted and foamed core layers are prevented from being formed.

Fig.18 is a view seen from an arrow mark 18 of Fig.17, showing a state in which the recess portions 73 are formed at the upper face of the rear portion 67 surrounding the front end rear base portions 82a and 82b.

By forming the recess portions 73 at the rear portion 67 surrounding the front and rear base portions 82a and 82b, the cooling effect of the rear portion 67 surrounding the front end rear base portions 82a and 82b is promoted and foamed core layers are prevented from being formed.

To provide a technology capable of achieving light weight formation and restraining fabrication cost of a seat structure for a small vehicle such as a motorcycle.

In a seat structure for a small vehicle such as a motorcycle, a cushion member 45 is mounted on an elastically deformable bottom plate 32 and the cushion member 45 is covered with a skin member 46 in which the bottom plate 32 is constituted by a sandwich structure 33 comprising a foamed core layer 34b and closely-packed skin layers 34a covering the foamed core layer 34b. Therefore, plate thickness of the bottom plate 32 can be increased by forming the foamed core layer 34b at an inner portion of the bottom plate 32. Therefore, rigidity can be promoted while achieving light weight formation of the bottom plate 32.

## Claims

1. Seat structure (30; 60) adapted to be mounted on a motorcycle (10) in which a cushion member (45; 75) is mounted on an elastically deformable bottom plate (32; 62) and said cushion member (45; 75) is covered by a skin member (46; 76),
wherein said bottom plate (32; 62) is constituted by a sandwich structure (33; 63) comprising a foamed core layer (34b; 64b) and unfoamed closely-packed skin layers (34a; 64a) covering said foamed core layer (34b; 64b), said unfoamed closely-packed skin layers (34a; 64a) and said foamed core layer (34b; 64b) being made by injection molding using one and the same molten foaming mold material as the starting material for producing said core layer (34b; 64b) and said skin layers (34a; 64a).

2. A seat structure according to Claim 1, **characterized in that** the skin member (46; 76) is folded along an outer edge of the bottom plate (32; 62) to an inner side thereof, a fixing needle (47; 77) is struck from below to the folded skin member (46; 76a) and the fixing needle (47; 77) is made to penetrate the closely-packed skin layer (34a; 64a) and the foamed core layer (34b; 64b).

3. Method for producing a bottom plate (32; 62) of a seat structure for a motorcycle, said bottom plate being adapted to carry a cushion member (45; 75), and said bottom plate (32) being constituted by a sandwich structure (33; 63) comprising a foamed core layer (34b; 64b) and unfoamed closely-packed skin layers (34a; 64a) covering said foamed core layer, said method comprising the following steps:
- injecting a molten foaming mold material (59) to fill a cavity (55a) of a die (55) in such a manner that the inner pressure of the cavity (55a) is higher than the pressure of foaming the molten foaming mold material (59), thereby inhibiting a foaming of the molten foaming mold material (59),
- allowing outside portions of the foaming mold material (59) inside said cavity (55a) to solidify, and
- reducing the pressure inside the cavity (55a) by opening said die (55), before an inner portion of the foaming mold material (59) is solidified, to thereby allow said inner portion to be foamed, and taking the bottom plate (32, 62) of the sandwich structure (33; 63) out of the molding die (55).

## Patentansprüche

1. Sitzstruktur (30; 60), ausgelegt zum Anbringen an einem Kraftrad (10), worin ein Polsterelement (45; 75) auf einer elastisch verformbaren Bodenplatte (32; 62) angebracht ist und das Polsterelement (45; 75) von einem Hautelement (46; 76) abgedeckt ist;
worin die Bodenplatte (32; 62) aus einer Sandwichstruktur (33; 63) aufgebaut ist, die eine geschäumte Kernschicht (34b; 64b) und nicht geschäumte, dicht gepackte Hautschichten (34a; 64a), die die geschäumte Kernschicht (34b; 64b) abdecken, aufweist, wobei die nicht geschäumten,
dicht gepackten Hautschichten (34a; 64a) und die geschäumte Kernschicht (34b; 64b) durch Spritzgießen unter Verwendung von ein und demselben geschmolzenen Schaumformmaterial als dem Ausgangsmaterial gebildet sind, um die Kernschicht (34b; 64b) und die Hautschichten (34a; 64a) herzustellen.

2. Sitzstruktur gemäß Anspruch 1, **dadurch gekennzeichnet, dass** das Hautelement (46; 76) entlang einem Außenrand der Bodenplatte (32; 62) zu deren Innenseite gefaltet ist, eine Befestigungsnadel (47; 77) von unten zu dem gefalteten Hautelement (46; 76a) geschoben ist und die Befestigungsnadel (47; 77) die dichtgepackte Hautschicht (34a; 64a) und die geschäumte Kernschicht (34b; 64b) durchdringt.

3. Verfahren zum Herstellen einer Bodenplatte (32; 62) einer Sitzstruktur für ein Kraftrad, wobei die Bodenplatte dazu ausgelegt ist, ein Polsterelement (45; 75) zu tragen, und die Bodenplatte (32) aus einer Sandwichstruktur (33; 63) aufgebaut ist, die eine geschäumte Kernschicht (34b; 64b) und nicht geschäumte, dicht gepackte Hautschichten (34a; 64a), die die geschäumte Kernschicht abdecken, aufweist, wobei das Verfahren die folgenden Schritte umfasst:
- Einspritzen eines geschmolzenen Schaumformmaterials (59) zum Füllen eines Hohlraums (55a) einer Form (55) derart, dass der Innendruck des Hohlraums (55a) höher ist als der Schäumungsdruck des geschmolzenen Schaumformmaterials (59), um hierdurch ein Schäumen des geschmolzenen Schaumformmaterials (59) zu verhindern,
- Erlauben, dass äußere Anteile des Schaumformmaterials (59) innerhalb des Hohlraums (55a) aushärten, und
- Reduzieren des Drucks innerhalb des Hohlraums (55a) durch Öffnen der Form (55), bevor ein innerer Anteil des Schaumformmaterials (59) verfestigt ist, um zu erlauben, dass der innere Anteil aufschäumt, und
- Herausnehmen der Bodenplatte (32; 62) der Sandwichstruktur (33; 63) aus der Form (55).

## Revendications

1. Structure de siège (30 ; 60) adaptée pour être montée sur une moto (10), dans laquelle un élément formant coussin (45 ; 75) est monté sur une plaque inférieure (32 ; 62) déformable élastiquement et ledit élément formant coussin (45 ; 75) est recouvert d'un élément formant peau (46 ; 76),
dans laquelle ladite plaque inférieure (32 ; 62) est constituée par une structure en sandwich (33 ; 63) comprenant une couche de noyau (34b ; 64b) expansée et des couches de peau (34a ; 64a) compactes non expansées recouvrant ladite couche de noyau (34b ; 64b) expansée, lesdites couches de peau (34a ; 64a) compactes non expansées et ladite couche de noyau (34b ; 64b) expansée étant réalisées par moulage par injection en utilisant un seul et même matériau de moulage à expansion fondu que le matériau de départ pour produire ladite couche de noyau (34b ; 64b) et lesdites couches de peau (34a ; 64a).

2. Structure de siège selon la revendication 1, **caractérisée en ce que** l'élément formant peau (46 ; 76) est replié le long d'un bord externe de la plaque inférieure (32 ; 62) vers un côté interne de celle-ci, une pointe à piquer (47 ; 77) est entrée à partir du dessous vers l'élément formant peau (46, 76a) replié et la pointe à piquer (47 ; 77) est amenée à pénétrer dans la couche de peau (34a ; 64a) compacte et la couche de noyau (34b ; 64b) expansée.

3. Procédé de production d'une plaque inférieure (32 ; 62) d'une structure de siège pour une moto, ladite plaque inférieure étant adaptée pour supporter un élément formant coussin (45 ; 75), et ladite plaque inférieure (32) étant constituée par une structure en sandwich (33 ; 63) comprenant une couche de noyau (34b ; 64b) expansée et des couches de peau (34a ; 64a) compactes non expansées recouvrant ladite couche de noyau expansée, ledit procédé comprenant les étapes suivantes consistant à :
- injecter un matériau de moulage à expansion (59) fondu pour remplir une cavité (55a) d'une matrice (55) de manière à ce que la pression interne de la cavité (55a) soit supérieure à la pression d'expansion du matériau de moulage à expansion (59) fondu, empêchant de ce fait une expansion du matériau de moulage à expansion (59) fondu,
- permettre aux parties extérieures du matériau de moulage à expansion (59) à l'intérieur de ladite cavité (55a) de se solidifier, et
- réduire la pression à l'intérieur de la cavité (55a) en ouvrant ladite matrice (55), avant qu'une partie intérieure du matériau de moulage à expansion (59) ne soit solidifiée, pour permettre de ce fait que ladite partie interne soit expansée, et
- sortir la plaque inférieure (32 ; 62) de la structure en sandwich (33 ; 63) de la matrice de moulage (55).
